# EUROPÄISCHE PATENTSCHRIFT

(11) **EP 0 712 488 B1**
(45) Veröffentlichungstag und Bekanntmachung des Hinweises auf die Patenterteilung: **04.10.2000**
(21) Anmeldenummer: 94921645.1
(22) Anmeldetag: 14.07.1994
(51) Int. Cl.: G01M 3/20, G01M 3/22

(54) **Testgasdetektion mit Quarzglasschicht, Heizung und gasaufzehrendem Vakuummeter**
Test gas detection with quarz glass film, heater, and gas extracting vacuum meter
Détection de gaz témoin avec un film en verre quartz, chauffage et jauge à vide d'extraction du gaz

(30) Priorität: 05.08.1993 DE 4326265
(43) Veröffentlichungstag der Anmeldung: 22.05.1996
(73) Patentinhaber: LEYBOLD AKTIENGESELLSCHAFT, 50968 Köln (DE)
(72) Erfinder: BÖHM, Thomas, D-50933 Köln (DE); DÖBLER, Ulrich, D-42929 Wermelskirchen (DE)
(74) Vertreter: Leineweber, Jürgen, Dipl.-Phys.
(86) Internationale Anmeldenummer: EP9402311
(87) Internationale Veröffentlichungsnummer: WO9504921

(56) Entgegenhaltungen:
- EP-A- 0 352 371
- WO-A-88/04774
- FR-A- 1 181 312
- US-A- 3 591 827
- TECHNISCHES MESSEN, Bd.49, Nr.5, Mai 1982, MUENCHEN,DE Seiten 193 - 199 R.LARSON 'Gegenwaertiger Stand der Entwicklung bei Heliummassenspektrometer-Lecksuchern.'

## Beschreibung

Die Erfindung bezieht sich auf einen Testgasdetektor für Lecksuchgeräte mit einem selektiven, bevorzugt für Testgas durchlässigen Einlasssystem, das eine Quarzglasschicht und eine Heizung umfasst, und mit einem das Vorhandensein von Testgas registrierenden gasaufzehrenden Vakuummeter. Außerdem betrifft die vorliegende Erfindung ein Verfahren zum Betrieb eines Testgasdetektors dieser Art.

Bei der hochempfindlichen Lecksuche kommt als Testgas im wesentlichen nur Helium in Frage. Im weiteren Text wird deshalb überwiegend auf Helium als Testgas Bezug genommen.

Bei Heliumlecksuchgeräten werden üblicherweise auf die Masse des Heliums eingestellte Massenspektrometer als Detektoren verwendet. Zum Betrieb eines Massenspektrometers ist ein Hochvakuumpumpsystem (Hochvakuumpumpe, Vorpumpe usw.) erforderlich, mit dessen Hilfe außerdem das bei einer positiven Prüfung in das Massenspektrometer eingetretene Helium entfernt wird (vgl. zum Beispiel die DE-A-34 21 533).

Aus der EP-A-352 371 und der FR-A-11 81 312 sind Heliumleckdetektoren mit Quarzglasschichten bekannt. Durch Heizen erhöht sich die Durchlässigkeit dieser Schichten für Helium um mehrere Dekaden. Die Quarzglasschichten sind jeweils in Form eines Fingers ausgebildet. Die in der EP-A-352 371 offenbarte Heizung besteht aus einem Heizdraht, der um die fingerförmig gestaltete Quarzglasschicht gewickelt ist.

Der vorliegenden Erfindung liegt die Aufgabe einer robusten und einfachen Anordnung zugrunde.

Erfindungsgemäß wird diese Aufgabe durch die Merkmale der Patentansprüche 1,8 gelost. Dadurch, dass sich die Quarzglasschicht auf dem aus Sinterwerkstoff bestehenden Träger abstützt, ist die selektive Trennwand robust und einfach handhabbar. Zwischen dem vorzugsweise aus Metall bestehenden Sinterwerkstoff und der Quarzglasschicht besteht ein großflächiger Kontakt, so dass sich eine Temperaturveränderung des Trägers vergleichsweise schnell auch auf die Quarzglasschicht auswirkt.

Das vom Vakuummeter abgegebene Stromsignal wird zweckmäßig einem hochempfindlichen Strom-/Spannungswandler zugeführt. Dieser ist im Rahmen der vorliegenden Erfindung vorteilhafterweise als Differenzierstufe ausgebildet, deren Verstärkung mit steigender Frequenz zunimmt. Ein Druckanstieg führt bei einer derartigen Differenzierungsstufe zu einem konstanten Ausgangssignal, das proportional zur Leckrate ist.

Ein Detektorsystem mit einer im Einlassbereich befindlichen heizbaren Quarzglasscheibe wird zweckmäßig derart betrieben, dass nach einem für die Bildung eines Messsignals ausreichenden Heliumdurchtritt durch die Quarzglasscheibe die Heizung abgeschaltet wird. Dadurch kann vermieden werden, dass unnötig viel Helium in das Detektorsystem gelangt. Außerdem wird eine sehr kurze Erholzeit erzielt. Noch in die Quarzglasscheibe hinein diffundiertes Helium diffundiert nach der erneuten Einschaltung der Heizung wieder zurück zur Pumpleitung.

Weitere Vorteile und Einzelheiten der Erfindung sollen an Hand von in den Figuren 1 bis 3 dargestellten Ausführungsbeispielen erläutert werden. Es zeigen
- - Figur 1: eine schematische Darstellung eines Lecksuchgerätes mit einem Testgasdetektor nach der Erfindung,
- - Figur 2: ein Beispiel für ein selektives Einlasssystem und ein Ionisationsvakuummeter und
- - Figur 3: einen Lecksucher nach Figur 1 mit einer dem Testgasdetektor vorgelagerten Kohlenwasserstoffsperre.

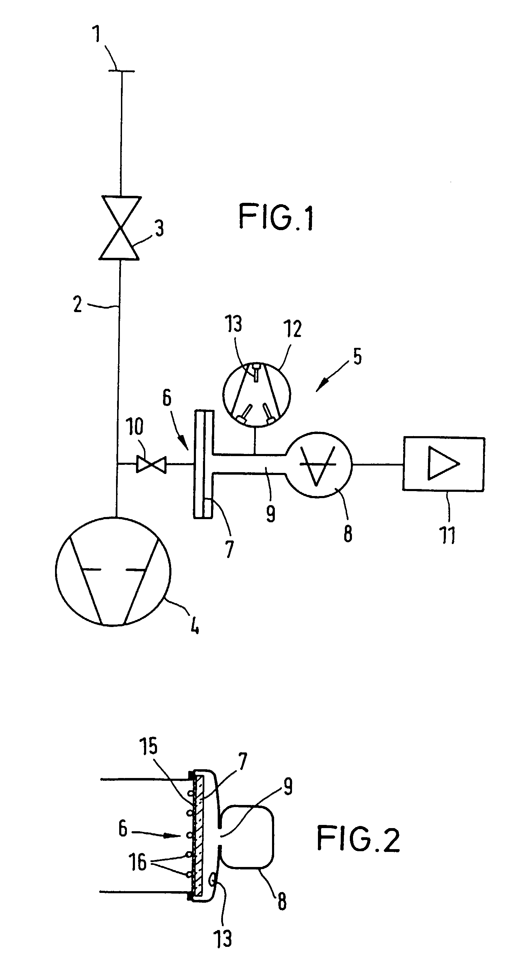

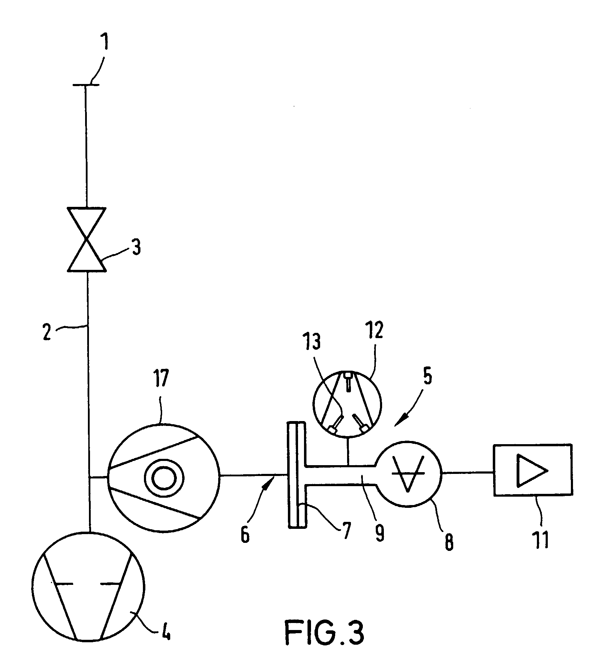

Bei den Ausführungsbeispielen nach den Figuren 1 und 3 ist der Einlass des schematisch dargestellten Lecksuchers mit 1 bezeichnet. Dieser Einlass 1 wird mit einem einer Testkammer verbunden. Die sich an den Einlaß 1 anschließende Leitung 2 mit dem Ventil 3 führt zu einer Vakuumpumpe 4, mit deren Hilfe das zu prüfende Gas am Testgasdetektor 5 vorbeigefördert wird. Auch die eventuell notwendige Evakuierung eines Prüflings oder einer Testkammer kann mit Hilfe der Vakuumpumpe 4 durchgeführt werden.

Bestandteil des Einlaßsystems 6 des Testgasdetektors 5 ist eine Membran oder Scheibe 7, die im wesentlichen nur für Testgas durchlässig ist. Diese Eigenschaften haben z.B. Polymer-Membranen oder beheizte dünne Quarzglasscheiben (vgl. EP-A 352371).

Befindet sich im Einlaßsystem 6 eine Polymer-Membran, dann ist zweckmäßig noch ein Ventil 10 vorgesehen, mit dem der Testdetektor 5 von der Leitung 3 trennbar ist. Umfaßt das Einlaßsystem 6 eine Quarzglasschicht, dann besteht die Möglichkeit, durch Ein- und Ausschalten einer Heizung die Verbindung des Testgasdetektors 5 mit der Leitung 3 herzustellen oder abzusperren.

Der in Strömungsrichtung hinter der Membran bzw. Scheibe 7 liegende Raum ist unmittelbar mit dem Innenraum des Ionisationsvakuummeters 8 verbunden und wird im weiteren als Meßraum 9 bezeichnet. An das Ionisationsvakuummmeter 8 schließt sich die Signalverarbeitung 11 an. Sie ist lediglich als Block mit einem Verstärkersymbol dargestellt.

An den Meßraum 9 angeschlossen ist noch ein Behälter 12 einem Getterstoff 13, der die Pumpwirkung des gasaufzehrenden Vakuummeters 8 unterstützt.

Figur 2 zeigt ein Ausführungsbeispiel für ein selektives Einlaßsystem 6. Es umfaßt eine aus Quarzglas bestehende Scheibe oder Schicht 7, die sich auf einem scheibenförmigen Träger 15 aus Sintermetall abstützt. Besonders zweckmäßig ist es, das Quarzglas auf die poröse Sintermetallscheibe aufzudampfen. Dadurch können gleichmäßige Quarzglasschichten erzeugt werden, die zusammen mit ihrem Träger robust und deshalb einfach handhabbar sind.

Mittels einer Heizung (Heizdrähte 16) ist die Sintermetallscheibe und damit die Quarzglasschicht 7 beheizbar. Der Quarzschicht 7 unmittelbar vorgelagert ist das Ionisationsvakuummmter 8, so daß der den Innenraum des Vakuummeters umfassende Meßraum 9 möglichst klein ist. Im Meßraum 9 befindet sich der Getterstoff 13.

Ist das mittels der Vakuumpumpe 4 am Testgasdetektor 5 vorbeigeförderte Gas nicht frei von Öl- oder ähnlichen Dämpfen, dann ist es zweckmäßig, dem Einlaßsystem 6 eine Kohlenwasserstoffsperre 17 vorzulagern. Diese kann als Kühlfalle oder - wie in Figur 3 dargestellt - als Turbomolekularpumpenstufe ausgebildet sein. Die relativ schweren Kohlenwasserstoffmoleküle gelangen dann nicht zum Einlaßsystem 6. Verschmutzungen des Einlaßsystems 6 - z.B. verursacht durch Cracken der Ölmoleküle im Bereich der beheizten Quarzglasschicht - treten nicht auf.

Vor der ersten Inbetriebnahme des erfindungsgemäßen Testgasdetektors 5 wird der Meßraum 9 zweckmäßig mit Hilfe einer separaten Vakuumpumpe evakuiert. Danach ist er in der Lage, sein Betriebsvakuum aufrechtzuerhalten.

Strömt Helium durch die Leitung 2 am Einlaßsystem 6 vorbei, dann gelangt bei offenem Ventil 10 bzw. bei beheizter Quarzglasschicht 7 ein Teil des Heliums in den Meßraum 9. Die dadurch bewirkte Druckerhöhung wird zum Ionisationsvakuummeter 8 registriert und mit Hilfe der Meßwertverarbeitung 11 angezeigt. Ein Anstieg des Heliumpartialdruckes wird von einem differenzierenden Verstärker zu einem konstandten Ausgangssignal verarbeitet, das proportional zur Leckrate ist. Soweit des Vakuummeter 8 selbst in der Lage ist, Helium zu pumpen, wird nach und nach der Heliumpartialdruck wieder kleiner. Um zu vermeiden, daß unnötig viel Helium in den Meßraum 9 gelangt, ist es zweckmägig, nach dem Registrieren eines Heliumsignals den Testgasdetektor 5 von der Leitung 2 zu trennen.

Darüberhinaus besteht die Möglichkeit, in der Leitung 2 bei geschlossenem Ventil 3 ein Vakuum zu erzeugen und die Verbindung zwischen dem Testgasdetektor 5 und der Leitung 2 - durch Öffnen des Ventils 10 oder durch Beheizen der Quarzglasschicht - herzustellen. Da der Heliumpartialdruck in der Leitung 2 kleiner ist als 10⁻⁹ mbar, strömt Helium aus dem Meßraum des Testgasssdetektors 5 durch das Einlaßsystem 6 zurück, so lange dort der Heliumpartialdruck höher ist. Der Testgasdetektor 5 kann somit - z.B. während des Standby-Betriebs "regeneriert" werden.

## Patentansprüche

1. Testgasdetektor für Lecksuchgeräte mit einem selektiven, bevorzugt für Testgas durchlässigen Einlasssystem (6), das eine Quarzglasschicht (7) und eine Heizung (16) umfasst, und mit einem das Vorhandensein von Testgas registrierenden gasaufzehrenden Vakuummeter (8), dadurch gekennzeichnet, dass sich die Quarzglasschicht (7) auf einem scheibenförmigen Träger (15) aus Sintermetall abstützt, vorzugsweise darauf aufgedampft ist.

2. Testgasdetektor nach Anspruch 1, dadurch gekennzeichnet, dass der Träger aus Sintermetall besteht und die Form einer Scheibe hat.

3. Testgasdetektor nach Anspruch 1 oder 2, dadurch gekennzeichnet, dass dem Einlasssystem (6) eine Kohlenwasserstoffsperre (17) vorgelagert ist.

4. Testgasdetektor nach Anspruch 3, dadurch gekennzeichnet, dass die Kohlenwasserstoffsperre als Kühlfalle oder als Reibungspumpe, vorzugsweise Turbomolekularvakuumpumpe (17), ausgebildet ist.

5. Testgasdetektor nach einem der Ansprüche 1 bis 4, dadurch gekennzeichnet, dass der sich an das selektive Einlasssystem (6, 7) anschließende, den Innenraum des Vakuummeters (8) einschließende Messraum (9) möglichst klein ist.

6. Testgasdetektor nach einem der vorhergehenden Ansprüche, dadurch gekennzeichnet, dass sich im Vakuummeter (8) bzw. im Messraum (9) ein Getterstoff befindet, der die Eigenschaft hat, alle Gase - bis auf das Testgas - zu pumpen.

7. Testgasdetektor nach einem der vorhergehenden Ansprüche, dadurch gekennzeichnet, dass zur Verarbeitung der vom Ionisationsvakuummeter (8) gelieferten Signale ein hochempfindlicher Strom/Spannungswandler, vorzugsweise ein differenzierender Verstärker, vorgesehen ist.

8. Verfahren zum Betrieb eines Testgasdetektors mit einem selektiven, bevorzugt für Testgas durchlässigen Einlasssystem (6), das eine Quarzglasschicht (7) und eine Heizung (16) umfasst, und mit einem das Vorhandensein von Testgas registrierenden gasaufzehrenden Vakuummeter (8), bei welchem Testgasdetektor sich die Quarzglasschicht (7) auf einem scheibenförmigen Träger (15) aus Sintermetall abstützt, vorzugsweise darauf aufgedampft ist, bei welchem Verfahren nach dem Durchtritt einer für die Bildung eines Messsignales ausreichenden Testgasmenge das Einlasssystem (6) durch Abschalten der Heizung abgesperrt wird.

9. Verfahren nach Anspruch 8, dadurch gekennzeichnet, dass der Testgasdetektor (5) während der Zeitabschnitte, in denen nicht gemessen wird, regeneriert wird, indem im Raum vor dem Einlass (6) bei eingeschalteter Heizung (16) ein Vakuum erzeugt wird.

## Claims

1. A test gas detector for leak finding devices with a selective inlet system (6), which is preferably permeable to test gas and comprises a quartz glass layer (7) and a heating element (16), and with a gas-absorbing vacuometer (8) registering the presence of test gas, characterised in that the quartz glass layer (7) is supported on a disk-shaped support (15) made of sintered metal and is preferably vaporised onto said support.

2. A test gas detector according to claim 1, characterised in that the support is made of sintered metal and has the form of a disk.

3. A test gas detector according to claim 1 or 2, characterised in that a hydrocarbon barrier (17) is arranged upstream of the inlet system (6).

4. A test gas detector according to claim 3, characterised in that the hydrocarbon barrier is constructed as a cooling trap or as a friction pump, preferably a turbomolecular vacuum pump (17).

5. A test gas detector according to one of claims 1 to 4, characterised in that the measuring chamber (9) adjoining the selective inlet system (6, 7) and enclosing the interior of the vacuometer (8) is as small as possible.

6. A test gas detector according to one of the preceding claims, characterised in that a getter substance is disposed in the vacuometer (8) or in the measuring chamber (9), which has the property of pumping all gases - apart from the test gas.

7. A test gas detector according to one of the preceding claims, characterised in that a highly sensitive current/voltage converter, preferably a differentiating amplifier, is provided for processing the signals supplied by the ionisation vacuometer (8).

8. A method for operating a test gas detector with a selective inlet system (6), which is preferably permeable to test gas and comprises a quartz glass layer (7) and a heating element (16), and with a gas-absorbing vacuometer (8) registering the presence of test gas, in which test gas detector the quartz glass layer (7) is supported on a disk-shaped support (15) made of sintered metal and is preferably vaporised onto said support, in which method the inlet system (6) is blocked by switching off the heating element after the passage of a quantity of test gas sufficient for forming a measurement signal.

9. A method according to claim 8, characterised in that the test gas detector (5) is regenerated during the time intervals when there is no measurement by generating a vacuum in the space upstream of the inlet (6) with the heating element (16) switched on.

## Revendications

1. Détecteur de gaz de test pour un détecteur de fuites comportant un système sélectif d'entrée (6), qui est perméable de préférence pour le gaz de test et comprend une couche de verre quartzeux (7) et un dispositif de chauffage (16), et un vacuomètre (8) qui absorbe le gaz et enregistre la présence du gaz de test, caractérisé en ce que la couche de verre quartzeux (7) prend appui sur un support en forme de disque (15) formé d'un métal fritté, et de préférence est déposé par évaporation sur ce support.

2. Détecteur de gaz de test selon la revendication 1, caractérisé en ce que le support est formé d'un métal fritté et possède la forme d'un disque.

3. Détecteur de gaz de test selon la revendication 1 ou 2, caractérisé en ce qu'un dispositif (17) de blocage vis-à-vis d'hydrocarbures est monté en amont du système d'entrée (6).

4. Détecteur de gaz de test selon la revendication 3, caractérisé en ce que le dispositif de blocage vis-à-vis d'hydrocarbures est agencé sous la forme d'un piège cryogénique ou sous la forme d'une pompe à friction de préférence sous la forme d'une pompe à vide turbomoléculaire (17).

5. Détecteur de gaz de test selon l'une des revendications 1 à 4, caractérisé en ce que l'espace de mesure (9), qui se raccorde au système d'entrée sélectif (6,7) et inclut l'espace intérieur du vacuomètre (8), est aussi petit que possible.

6. Détecteur de gaz de test selon l'une des revendications précédentes, caractérisé en ce que dans le vacuomètre (8) ou dans l'espace de mesure (9) est disposée une substance formant getter, qui a la propriété de pomper tous les gaz - hormis le gaz de test.

7. Détecteur de gaz de test selon l'une des revendications précédentes, caractérisé en ce que pour le traitement des signaux délivrés par le vacuomètre à ionisation (8), il est prévu un convertisseur courant/tension très sensible, de préférence un amplificateur différentiateur.

8. Procédé pour faire fonctionner un détecteur de gaz de test comportant un système sélectif d'entrée (6), qui est perméable de préférence pour le gaz de test et comprend une couche de verre quartzeux (7) et un dispositif de chauffage (16), et un vacuomètre (8) qui absorbe le gaz et enregistre la présence du gaz de test, et dans lequel la couche de verre quartzeux (7) prend appui sur un support en forme de disque (15) formé d'un métal fritté, et de préférence est déposé par évaporation sur ce support, procédé selon lequel, après le passage d'une quantité de gaz suffisante pour former un signal de mesure, le système d'entrée (6) est bloqué par débranchement du dispositif de chauffage.

9. Procédé selon la revendication 8, caractérisé en ce que le détecteur de gaz de test (5) est régénéré pendant les intervalles de temps, pendant lesquels aucune mesure n'est effectuée, par le fait qu'un vide est produit dans l'espace situé en amont de l'entrée (6), alors que le dispositif de chauffage (16) est branché.
